# EUROPEAN PATENT SPECIFICATION

(11) **EP 1 217 314 B1**
(45) Date of publication and mention of the grant of the patent: **10.12.2003**
(21) Application number: 00128295.3
(22) Date of filing: 22.12.2000
(51) Int. Cl.: F24H 3/04

(54) **Hot air space heater**
Luftheizer
Réchauffeur d'air

(43) Date of publication of application: 26.06.2002
(73) Proprietor: TOYOTOMI CO., LTD., Nagoya-shi, Aichi-ken (JP)
(72) Inventor: Nagai, Katsuyuki, Chita-gun, Aichi-Ken (JP)
(74) Representative: Hoffmann, Klaus-Dieter, Dipl.-Ing.

(56) References cited:
- PATENT ABSTRACTS OF JAPAN vol. 2000, no. 02, 29 February 2000 (2000-02-29) & JP 11 316052 A (TOYOTOMI CO LTD), 16 November 1999 (1999-11-16)
- PATENT ABSTRACTS OF JAPAN vol. 1996, no. 01, 31 January 1996 (1996-01-31) & JP 07 243703 A (TOYOTOMI CO LTD), 19 September 1995 (1995-09-19)

## Description

### BACKGROUND OF THE INVENTION

This invention relates to a hot air space heater, and more particularly to a hot air space heater which is adapted to blow hot air out of a whole hot air outlet provided on a front wall of a frame and in which a burner and an air feed passage are arranged in the frame while being positioned in proximity to one side of the frame rather than at a central portion thereof.

The assignee proposed a hot air space heater which is constructed in such a manner as disclosed in Japanese Patent Application Laid-Open Publication No. 316052/1999. The conventional hot air space heater proposed includes a frame, in which a burner provided in an upper portion thereof with a combustion chamber and components such as a fuel tank and the like are arranged side by side. Such juxtaposition of the burner and oil tank to each other causes the burner to be positioned in proximity to one side of the frame rather than at a central portion thereof. Also, the conventional hot air space heater includes a duct structure arranged so as to define an air feed passage between an indoor air intake port arranged at a rear wall of the frame and a hot air outlet formed at a front wall of the frame. The duct structure has the above-described combustion chamber arranged therein. A convection fan is arranged in proximity to the indoor air intake port so as to forcibly introduce indoor air through the air intake port into the duct structure. The air thus introduced into the duct structure is heated by combustion heat generated in the combustion chamber and then discharged in the form of hot air from the hot air outlet. The hot air outlet is formed so as to laterally widely extend from a region of the front wall of the frame corresponding to the combustion chamber to a region thereof corresponding to the fuel tank, resulting in having a large area. The duct structure is configured so as to permit hot air to be discharged from the whole hot air outlet.

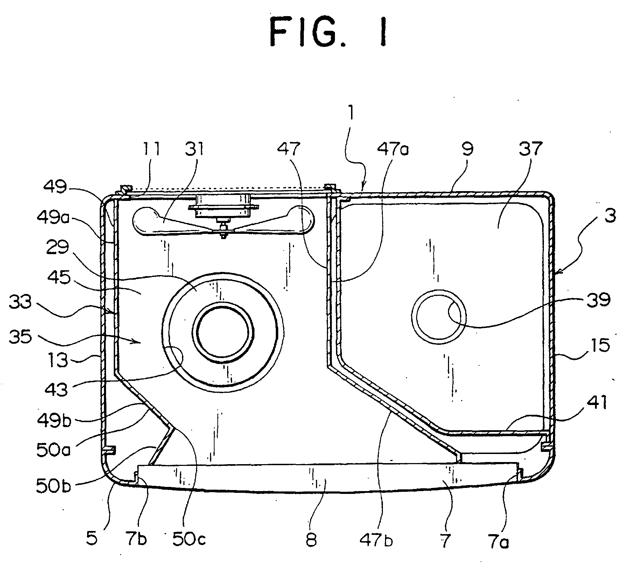

The conventional duct structure generally constructed as described above also includes a first side wall located in proximity to a central portion of the frame rather than the combustion chamber and a second side wall positioned outwardly of the combustion chamber. The first side wall includes a first rear side wall section arranged so as to extend from the rear wall of the frame toward the front wall thereof and terminated at a predetermined position short of the front wall of the frame, as well as a first front side wall section. The first front side wall includes an induction portion arranged so as to overlap the first rear side wall section and obliquely extending so as to gradually approach the combustion chamber and a guide portion arranged between the induction portion and one of open ends of the hot air outlet and obliquely extending so as to gradually approach the one open end of the hot air outlet. The induction portion and guide portion are indicated at reference numerals 8 and 7 in Fig. 1 of the above-described Japanese publication. The second side wall includes a second rear side wall section arranged so as to extend from the rear wall of the frame toward the front wall thereof and terminated at a predetermined position short of the front wall of the frame and a second front side wall section formed integrally with the second rear side wall section and obliquely extending so as to approach the combustion chamber and the other open end of the hot air outlet. The first rear side wall section is fixedly mounted thereon with a guide plate for permitting air fed by the convection fan to be forcibly blown against the induction portion. The guide plate is designated at reference numeral 9 in Fig. 1 of the Japanese publication.

Employees of the assignee who designed the above-described duct structure considered that arrangement of the induction portion on the first side wall section in a manner to extend while approaching the combustion chamber permits air abutted against the induction portion to form a strong air stream. However, a variety of experiments made by them revealed that the conventional duct structure fails to exhibit such an meritorious effect as expected or desired. Also, the conventional duct structure has a problem of causing hot air blown out of the hot air outlet to be directed obliquely rather than forwardly.

### SUMMARY OF THE INVENTION

The present invention has been made in view of the foregoing disadvantage of the prior art.

Accordingly, it is an object of the present invention to provide a hot air space heater which is capable of permitting hot air to be uniformly blown out or discharged from a hot air outlet which is formed so as to laterally widely extend.

It is another object of the present invention to provide a hot air space heater which is capable of permitting hot air to be uniformly blown out of a hot air outlet which is formed so as to laterally widely extend while being simplified in structure.

It is a further object of the present invention to provide a hot air space heater which is capable of permitting hot air uniformly blown out of a hot air outlet which is formed so as to laterally widely extend to be directed as forwardly as possible without being deflected in an oblique direction.

In accordance with the present invention, a hot air space heater is provided, which includes a frame including a front plate, a rear plate, a pair of side plates and a top plate. The front plate of the frame is provided with a hot air outlet and the rear plate of the frame is provided with an indoor air intake port. The hot air space heater also includes a burner arranged in the frame in proximity to one of the side plates of the frame rather than at a central portion of the frame, a combustion chamber defined in the frame in a manner to be positioned above the burner and communicate therewith, an indoor air convection fan arranged in the vicinity of the indoor air intake port to feed indoor air through the indoor air intake port into the frame and guide the indoor air heated by combustion heat generated in the combustion chamber toward the hot air outlet, and a duct structure arranged in the frame and having the combustion chamber incorporated therein. The duct structure is arranged so as to define an air feed passage for guiding the heated indoor air to the hot air outlet. The hot air outlet is formed so as to extend beyond a combustion chamber-opposite region of the front plate of the frame opposite to the combustion chamber to a region of the front-plate in proximity to the other side plate of the frame.

In the present invention generally constructed as described above, the duct structure includes a first side wall arranged in proximity to a cental portion of the frame rather than the combustion chamber. The first side wall includes a first rear side wall portion having a lateral proximal end connected to the rear plate of the frame and is arranged so as to extend from the rear plate of the frame toward a central portion of the front plate of the frame. The first rear side wall portion has an inner surface which faces the air feed passage directed to the combustion chamber and has a lateral distal end terminated at a predetermined position short of the front plate of the frame. The first side wall also includes a first front side wall portion arranged between the lateral distal end of the first rear side wall portion and a first open end of the hot air outlet positioned on a side of the other side plate of the frame. The first front side wall portion is so arranged that a distance between an inner surface thereof facing the air feed passage and the hot air outlet is gradually reduced toward the first open end.

The duct structure also includes a second side wall positioned in proximity to the one side plate of the frame rather than the combustion chamber. The second side wall includes a second rear side wall portion and a second front side wall portion. The second rear side wall portion has a lateral proximal end connected to the rear plate of the frame so as to extend therefrom toward the front plate of the frame and a lateral distal end terminated at a predetermined position short of the front plate of the frame while keeping an inner surface thereof which faces the air feed passage directed to the combustion chamber. The second front side wall portion is arranged so as to be located between the lateral distal end of the second rear side wall portion and a second open end of the hot air outlet positioned on a side of the one side plate of the frame. The second front side wall portion includes a first guide and a second guide. The first guide is connected at a lateral proximal end thereof to the lateral distal end of the second rear side wall portion and arranged so as to obliquely extend toward the front plate of the frame while keeping an inner surface thereof which faces the air feed passage approaching the inner surface of the first front side wall portion. The second guide is arranged so as to extend from a lateral distal end of the first guide toward the second open end of the hot air outlet while keeping an inner surface thereof which faces the air feed passage gradually away from the inner surface of the front side wall portion.

The combustion chamber is arranged in the duct structure, to thereby act as an obstacle, so that most of air fed by the convection fan may be permitted to flow along the inner surfaces of the first and second rear side wall portions of the first and second side walls. This permits a part of air flowing along the first rear side wall portion to flow along the inner surface of the first front side wall portion contiguous to the first rear side wall portion. Also, this permits air flowing along the second rear side wall portion to be forced or abutted against the inner surface of the first guide of the second front side wall portion. Air flowing toward the front plate of the frame is abutted against the first guide, to thereby be directed toward a center of the hot air outlet. Thus, the air flow acts so that of air passing between the f irst front side wall portion and the combustion chamber, a portion thereof which tends to flow toward the front plate of the frame rather than along the first front side wall portion is permitted to be directed toward the first front side wall portion as much as possible. This permits air flowing on a side of the first side wall to be spread in a direction in which the first front side wall portion extends. Also, when air is abutted on the first guide, it is prevented from flowing into a connection between the first guide and the second guide from an exterior, leading to a Coanda effect, resulting in air extensively flowing along the inner surface of the second guide. Thus, apart of air abutted against the first guide is permitted to flow along the second guide. Such air flow functions so that of air flowing toward the center of the hot air outlet, a portion thereof which flows in proximity to the second side wall is partially discharged from the hot air outlet in a direction in which the second guide extends. Such configuration permits hot air to be not only discharged from the whole hot air outlet laterally spreading but directed toward the front of the space heater as much as possible.

The first and second guides of the second front side wall portion may be formed by subjecting a single metal plate to bending so that they cooperate with each other to define a chevron-like configuration in cross section of which a top is directed inwardly of the frame. Alternatively, the first and second guides of the second front side wall portion may be formed by subjecting a single metal plate to bending so that they cooperate with each other to define a round or curved configuration in cross section of which a top is directed inwardly of the frame. Such formation of the first and second guides by a single metal sheet permits air directed toward a front of the frame to be smoothly varied in direction, resulting in air being satisfactorily guided to a position far from the front of the frame.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings; wherein:
Fig. 1 is a cross-sectional view showing an embodiment of a hot air space heater according to the present invention;
Fig. 2 is a vertical sectional view of the hot air space heater shown in Fig. 1; and
Fig. 3 is a cross-sectional view showing another embodiment of a hot air space heater according to the present invention.

### DETAILED DESCRIPTION OF THE PREFERRED EMBODIMENTS

Now, a hot air space heater according to the present invention will be described with reference to the accompanying drawings.

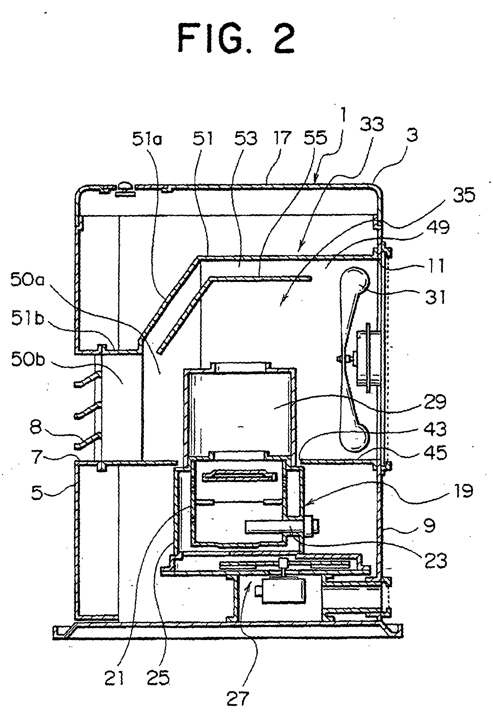

Referring first to Figs. 1 and 2, an embodiment of a hot air space heater according to the present invention is illustrated, which is applied to an oil-fired space heater using kerosine as fuel therefor. A hot air space heater of the illustrated embodiment which is generally designated at reference numeral 1 includes a housing or frame 3 made of metal. The frame 3 includes a front plate 5 formed with a hot air outlet 7 and a rear plate 9 formed with an indoor air intake port 11. Also, the frame 3 includes a pair of side plates 13 and 15 through which the front plate 5 and rear plate 9 are joined to each other, as well as a top plate 17. The frame 3 is provided therein with a burner 19 in a manner to be arranged in proximity to one of the side plates 13 and 15 rather than at a central portion of the frame 3. In the illustrated embodiment, the burner 19 is arranged in proximity to one side plate 13 of the frame 3.

The hot air outlet 7 is formed so as to laterally extend to a combustion chamber-opposite region of the front plate 5 of the frame 3 or a region of the front plate of the frame 3 positioned in proximity to the other side plate 15 of the frame 3 beyond a region of the front plate 5 of the frame 3 opposite to the combustion chamber 19. More particularly, the hot air outlet 7 is arranged so as to extend to a region of the front plate 5 of the frame 3 opposite to a fuel tank (not shown). Also, the hot air outlet 7, as shown in Fig. 2, is provided with three louvers in a manner to be spaced from each other in a vertical direction and so as to orientate hot air in a downward direction.

The burner 19, in the illustrated embodiment, is constituted by a so-called pot-type burner. Thus, the burner 19 includes a pot 21 having a side wall formed with a plurality of through-holes or air holes. The burner 19 also includes a ceramic heater 23 arranged in the pot 21 for preheating and ignition, a cylindrical member 25 arranged around the pot 21 so as to define an air channel therebetween for guiding combustion air therethrough to the pot, and a combustion air feed fan 27 arranged below the cylindrical member 25 for feeding indoor air acting as combustion air into the cylindrical member 25. The pot 21 is provided therein with a fuel nozzle (not shown) through which kerosine fuel is fed to the pot 21. For this purpose, the fuel nozzle is fed with fuel from a fuel tank (not shown) by means of a fuel pump (not shown). The frame 3 is also provided therein with a combustion chamber 29 defined by a cylinder mounted on the burner 19. The combustion chamber 29 is formed so as to communicate with the burner 19, resulting in being fed with a combustion flame and combustion gas from the burner 19. A structure of such a pot-type burner and operation thereof are widely known in the art.

The frame 3 has an indoor air convection fan 31 arranged in proximity to the indoor air intake port 11. In the illustrated embodiment, the indoor air convention fan 31 is constituted by an axial fan. The convection fan 31 includes a motor, which is fixed on the frame 3 by means of a mount arm. Also, the frame 3 is provided therein with a duct structure 33, in which the convection fan 31 and combustion chamber 29 are received. The convection fan 31 functions to forcibly feed indoor air into the frame 3 through the indoor air intake port 11. The indoor air is then heated by combustion heat generated in the burner 19 and combustion chamber 29 and mixed with combustion gas produced therein. Then, the convection fan 31 forcibly guides the thus-heated and mixed indoor air toward the hot air outlet 7. The duct structure 33 provides an air feed passage which permits the indoor air forcibly fed by the convection fan 31 to be guided to the hot air outlet 7. The duct structure will be described in detail hereinafter.

The frame 3, as shown in Fig. 1, is provided therein with a fuel tank receiving pan 37 and a fuel tank (not shown) put on the pan 37. The fuel tank receiving pan 37 is provided on a central portion thereof with a stopper fit portion 39 in which a stopper of the fuel tank is fitted. The fuel tank is located between the duct structure 33 and the other side plate 13 of the frame 3. The fuel tank receiving pan 37, as shown in Fig. 1, is arranged so as to occupy about half of an area of the frame 3 in plan. Reference numeral 41 designates a guide partition wall for guiding the fuel tank when it is placed on the fuel tank receiving pan 37.

The duct structure 33 is made of a metal plate and includes a bottom wall 45 arranged so as to horizontally extend in the frame 3 and formed with a through-hole 43 via which the combustion chamber 29 extends, first and second side walls 47 and 49 connected at a lower end thereof to the bottom wall 45 and arranged so as to vertically extend from the bottom wall 45, and a top wall 51 (Fig. 2) mounted on an upper end of each of the first and second side walls 47 and 49 so as to face the top plate 17 of the frame 3.

The first side wall 47 of the duct structure 33 is located in proximity to the central portion of the frame 3 rather than the combustion chamber 29. The first side wall 47 includes a first rear wall portion 47a and a first front side wall portion 47b. The first rear side wall portion 47a has a lateral proximal end connected to the rear plate 9 of the frame 3 and is arranged so as to extend from the rear plate 9 of the frame 3 toward a central portion of the front plate 5 of the frame 3. Also, the first rear side wall portion 47a has an inner surface which faces the air feed passage 35 directed to the combustion chamber 29 and has a lateral distal end terminated at a predetermined position short of the front plate 5 of the frame 3. The first front side portion 47b is arranged between the lateral distal end of the first rear side wall portion 47a and a first open end 7a of the hot air outlet 7 positioned on a side of the other side plate 15 of the frame 3. Also, the first front side wall portion 47b is so arranged that a distance between an inner surface thereof facing the air feed passage 35 and the hot air outlet 7 is gradually reduced toward the first open end 7a. As shown in Fig. 1, the first front side wall portion 47b has a lateral distal end terminated short of the first open end 7a of the hot air outlet 7. Such arrangement results in a portion of the first front side wall portion 47b between the lateral distal end thereof and the first open end 7a constituting an apparent air outlet.

The second side wall 49 positioned in proximity to the one side plate 13 of the frame 3 rather than the combustion chamber 29 includes a second rear wall portion 49a and a second front side wall portion 49b. The second rear side wall portion 49a has a lateral proximal end connected to the rear plate 9 of the frame 3 so as to extend therefrom toward the front plate 5 of the frame 3 and a lateral distal end terminated at a predetermined position short of the front plate 5 of the frame 3 while keeping an inner surface thereof which faces the air feed passage 35 directed to the combustion chamber 29. The second front side wall portion 49b is arranged so as to be located between the lateral distal end of the second rear side wall portion 49a and a second open end 7b of the hot air outlet 7 positioned on a side of the one side plate 13 of the frame 3. Also, the second front side wall portion 49b is constituted by a first guide 50a and a second guide 50b. The first guide 50a is connected at a lateral proximal end thereof to the lateral distal end of the second rear side wall portion 49a and arranged so as to obliquely extend toward the front plate 5 of the frame 3 while keeping an inner surface thereof which faces the air feed passage 35 approaching the inner surface of the first front side wall portion 47b. Also, the second guide 50b is arranged so as to extend from a lateral distal end of the first guide 50a toward the second open end 7b of the hot air outlet 7 while keeping an inner surface thereof which faces the air feed passage 35 gradually away from the inner surface of the first front side wall portion 47b. In the illustrated embodiment, the second side wall 49 is formed by subjecting a single metal plate to bending so that the first and second guides 50a and 50b of the second front side wall portion 49b cooperate with each other to define a chevron-like configuration in cross section of which a top is directed inwardly of the frame 3 or to the first front side wall portion 47b. Formation of the second side wall 49 by bending in the illustrated embodiment facilitates manufacturing of the duct structure 33.

In the illustrated embodiment, the first rear side wall portion 47a and second rear side wall portion are so arranged that the inner surfaces thereof are substantially parallel to each other. Likewise, the first guide 50a and first front side surface portion 47b are arranged so that the inner surfaces thereof are substantially parallel to each other. Further, the first guide 50a and second guide 50b are arranged in such a manner that a boundary 50c defined therebetween is positioned on a side of the hot air outlet 7 rather than a side of the combustion chamber 29. The boundary 50c is defined so as to project from the inner surface of the second rear side wall portion 49a by a length about one fourth as large as a distance between the first rear side wall portion 47a and the second rear side-wall portion 49a. In other words, the boundary 50c is arranged so as to project from the inner surface of the second rear side wall portion 49a by a length substantially equal to the shortest distance between the inner surface of the second rear side wall portion 49a and an outer surface of the cylinder defining the combustion chamber 29 therein. Such arrangement permits a large part of air passing between the inner surface of the second rear side wall portion 49a and the outer surface of the cylinder to be abutted against the first guide 50a. A function of the first guide 50a and second guide 50b will be described hereinafter.

The hot air outlet 7, as shown in Fig. 2, has an opening formed into a height smaller than that of an opening of the indoor air intake port 11. In the illustrated embodiment, the opening of the hot air outlet 7 is formed into a height substantially one half as large as that of the opening of the indoor air intake port 11. Thus, the top wall 51 of the duct structure 33 includes an inclined portion 51a arranged so as to downwardly direct indoor air fed by the convection fan 31 toward the hot air outlet 7 and a horizontal portion 51b connected to the inclined portion 51a so as to substantially horizontally extend therefrom toward the hot air outlet 7. The inclined portion 51a is arranged in correspondence to the first guide 50a of the second front side wall portion 49b and the horizontal portion 51b is arranged in correspondence to the second guide 50b of the second front side wall portion 49b. In the illustrated embodiment, the duct structure 33 has a partition plate 55 arranged therein so as to define a passage 53 between the top wall 51 and the partition plate 55. The passage 53 thus formed between the top wall 51 and-the partition plate 55 functions to prevent heat generated in the combustion chamber 43 from being transmitted directly to the top wall 51. Such construction per se is known in the art.

The configuration of the illustrated embodiment that the combustion chamber 29 is arranged in the duct construction permits most of air fed by the convection fan 31 to flow along the inner surfaces of the first and second rear side wall portions 47a and 49a of the first and second side walls 47 and 49. A part of air flowing along the first rear side wall portion 47a is permitted to flow along the inner surface of the first front side wall portion 47b contiguous to the first rear side wall portion 47a. Also, air flowing along the second rear side wall portion 49a is forced or abutted against the inner surface of the first guide 50a of the second front side wall portion 49b. Air flowing toward the front plate 5 of the frame 3 is abutted against the first guide 50a, to thereby be varied in direction, resulting in being directed toward a center of the hot air outlet 7. Thus, the air flow acts so that of air passing between the first front side wall portion 47b and the combustion chamber 29, a portion thereof which tends to flow toward the front plate 5 of the frame 3 rather than along the first front side wall portion 47a is permitted to be directed toward the first front side wall portion 47b as much as possible. This permits air flowing on a side of the first side wall 47 to be spread in a direction in which the first front side wall portion 47b extends. Also, when air is abutted on the first guide 50a, air is prevented from flowing into a connection between the first guide 50a and the second guide 50b from an exterior, leading to a Coanda effect, resulting in air extensively flowing along the inner surface of the second guide 50b. Thus, a part of air abutted against the first guide 50a is permitted to flow along the second guide 50b. Such air flow functions so that of air flowing toward the center of the hot air outlet 7, a portion thereof which flows in proximity to the second side wall 49 is partially discharged from the hot air outlet 7 in a direction in which the second guide 50b extends. Such configuration permits hot air to be not only discharged from the whole hot air outlet 7 laterally widely extending, but directed toward a front of the space heater as much as possible.

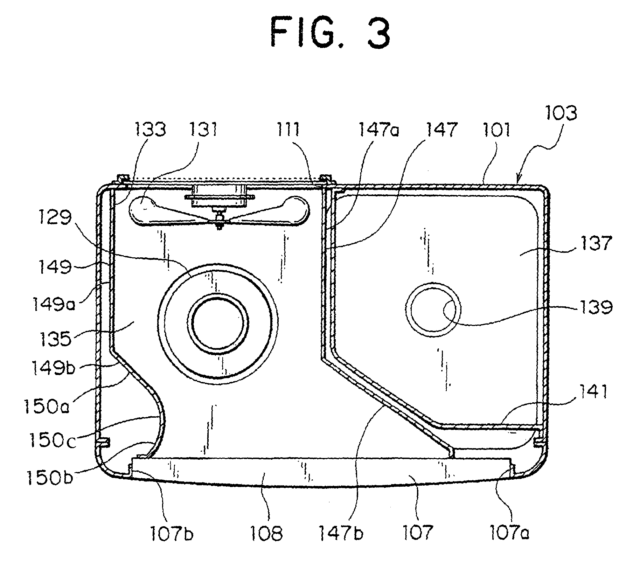

Referring now to Fig. 3, another embodiment of a hot air space heater according to the present invention is illustrated. In connection with the illustrated embodiment, reference numerals correspond to those discussed in the embodiment described above, except with an additional prefix of 100. In a hot air space heater of the illustrated embodiment generally designated at reference numeral 101, a second side wall 149 of a duct structure 133 is constructed in a manner different from the second side wall 49 in the above-described embodiment. More particularly, in the illustrated embodiment, a first guide 150a and a second guide 150b of a second side wall portion 149b are formed by subjecting a single metal plate to bending so that they cooperate with each other to define a curved configuration in cross section of which a top is directed inwardly of a frame 103. In the illustrated embodiment as well, the first guide 150a has an inner surface formed into a radius of curvature larger than that of a second guide 150b. Also, the first and second guides 150a and 150b are so arranged that a boundary 150c therebetween is defined on a side of a hot air outlet 107 rather than a side of a combustion chamber 129. The boundary 150c is arranged so as to project from an inner surface of the second rear side wall portion 149a in a length about one fourth as large as a distance between a first rear side wall portion 147a of a first side wall 147 and a second rear side wall portion 149a of the second side wall 149. In other words, the boundary 150c between the first guide 150a and the second guide 150b is arranged so as to project from the inner surface of the second rear side wall portion 149 by a length substantially equal to the shortest distance between the second rear side wall portion 149a and an outer surface of a cylinder constituting the combustion chamber 129. Such construction permits a large part of air passing between the inner surface of the second rear side wall portion 149a and the outer surface of the cylinder for the combustion chamber 129 to be abutted against the first guide 150a. Thus, it will be noted that the first and second guides 150a and 150b exhibit the same function as the first and second guides 50a and 50b in the embodiment described above. Also, in the illustrated embodiment, the boundary 150c has a top or projection formed into a round configuration rather than an acute shape unlike the above-described embodiment, to thereby ensure smooth air flow. This permits the amount of air directed outwardly of a frame 103 at a front portion of an air feed passage 135 to be increased, leading to an increase in velocity of the air. This results in air discharged from a hot air outlet 107 being directed toward a front of the frame 103.

The hot air space heater of each of the embodiments described above is constructed in the form of a pot-type oil fired space heater. However, in the present invention, the burner is not limited to any specific type so long as the air feed structure described above is applied thereto. Thus, the present invention may be applied to a combustion appliance such as a combustion appliance using gas fuel, that using gasified fuel obtained by vaporization of liquid fuel, or the like.

While preferred embodiment of the invention have been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A hot air space heater (1, 101) comprising:
a frame (3, 103) including a front plate (5), a rear plate (9), a pair of side plates (13, 15) and a top plate (17);
said front plate of said frame being provided with a hot air outlet (7, 107) and said rear plate of said frame being provided with an indoor air intake port (11, 111);
a burner (19) arranged in said frame in proximity to one of said side plates of said frame rather than at a central portion of said frame;
a combustion chamber (29, 129) defined in said frame in a manner to be positioned above said burner and communicate therewith;
an indoor air convection fan (31, 131) arranged in the vicinity of said indoor air intake port to feed indoor air through said indoor air intake port into said frame and guide the indoor air heated by combustion heat generated in said combustion chamber toward said hot air outlet; and
a duct structure (33, 133) arranged in said frame and having said combustion chamber incorporated therein;
said duct structure being arranged so as to define an air feed passage (35, 135) for guiding the heated indoor air to said hot air outlet;
said hot air outlet being formed so as to extend beyond a combustion chamber-opposite region of said front plate of said frame opposite to said combustion chamber to a region of said front plate in proximity to the other side plate of said frame,
**characterized in that**:
said duct structure includes a first side wall (47, 147) arranged in proximity to a cental portion of said frame rather than said combustion chamber;
said first side wall includes a first rear side wall portion (47a, 147a) having a lateral proximal end connected to said rear plate of said frame and being arranged so as to extend from said rear plate of said frame toward a central portion of said front plate of said frame;
said first rear side wall portion has an inner surface which faces said air feed passage directed to said combustion chamber and has a lateral distal end terminated at a predetermined position short of said front plate of said frame;
said first side wall also includes a first front side wall portion (47b, 147b) arranged between said lateral distal end of said first rear side wall portion and a first open end (7a, 107a) of said hot air outlet positioned on a side of the other side plate of said frame;
said first front side wall portion is so arranged that a distance between an inner surface thereof facing said air feed passage and said hot air outlet is gradually reduced toward said first open end;
said duct structure also includes a second side wall (49, 149) positioned in proximity to said one side plate of said frame rather than said combustion chamber;
said second side wall includes a second rear side wall portion (49a, 149a) and a second front side wall portion (49b, 149b)
said second rear side wall portion has a lateral proximal end connected to said rear plate of said frame so as to extend therefrom toward said front plate of said frame and a lateral distal end terminated at a predetermined position short of said front plate of said frame while keeping an inner surface thereof which faces said air feed passage directed to said combustion chamber;
said second front side wall portion is arranged so as to be located between said lateral distal end of said second rear side wall portion and a second open end (7b, 107b) of said hot air outlet positioned on a side of said one side plate of said frame;
said second front side wall portion includes a first guide (50a, 150a) and a second guide (50b, 150b).
said first guide is connected at a lateral proximal end thereof to said lateral distal end of said second rear side-wall portion and arranged so as to obliquely extend toward said front plate of said frame while keeping an inner surface thereof which faces said air feed passage approaching said inner surface of said first front side wall portion; and
said second guide is arranged so as to extend from a lateral distal end of said first guide toward said second open end of said hot air outlet while keeping an inner surface thereof which faces said air feed passage gradually away from said inner surface of said front side wall portion.

2. A hot air space heater (1, 101) as defined in claim 1, **characterized in that** said burner uses fuel in the form of liquid; and
said frame is provided therein with a fuel tank in a manner to be positioned in a space between said duct structure and said the other side plate.

3. A hot air space heater (1, 101) as defined in claim 2, **characterized in that** said hot air outlet is arranged so as to extend to a region of said front plate of said frame opposite to said fuel tank.

4. A hot air space heater (1, 101) as defined in claim 1, **characterized in that** said hot air outlet has an opening formed into a height smaller than that of said indoor air intake port;
said duct structure includes a top wall (51) arranged so as to face said top plate of said frame;
said top wall of said duct structure includes an inclined portion (51a) arranged so as to downwardly direct said indoor air fed by said convection fan toward said hot air outlet and a horizontal portion (51b) connected to said inclined portion so as to substantially horizontally extend therefrom toward said hot air outlet; and
said inclined portion is arranged in correspondence to said first guide of said second front side wall portion and said horizontal portion is arranged in correspondence to said second guide of said second front side wall portion.

5. A hot air space heater (1, 101) as defined in claim 4, **characterized in that** said first side wall is arranged in correspondence to said inclined portion and horizontal portion.

6. A hot air space heater (1, 101) as defined in claim 1, **characterized in that** said first and second guides of said second front side wall portion are formed by subjecting a single metal plate to bending so that they cooperate with each other to define a chevron-like configuration in cross section of which a top is directed inwardly of said frame.

7. A hot air space heater (1, 101) as defined in claim 1, **characterized in that** said inner surface of said first rear side wall portion and said inner surface of said second rear side wall portion are formed so as to be parallel to each other; and
said first guide has an inner surface defined in parallel to said inner surface of said first front side wall portion.

8. A hot air space heater (101) as defined in claim 1, **characterized in that** said inner surface of said first rear side wall portion and said inner surface of said second rear side wall portion are formed so as to be parallel to each other; and
said first and second guides (150a, 150b) of said second front side wall portion (149) are formed by subjecting a single metal plate to bending so that they cooperate with each other to define a curved configuration in cross section of which a top is directed inwardly of said frame.

9. A hot air space heater (101) as defined in claim 8, **characterized in that** said inner surface of said first guide is formed into a radius of curvature larger than that of said second guide.

10. A hot air space heater (1, 101) as defined in claim 6, **characterized in that** said first and second guides are so arranged that a boundary (50c, 150c) therebetween is defined on a side of said hot air outlet rather than a side of said combustion chamber.

11. A hot air space heater (1, 101) as defined in claim 8, **characterized in that** said first and second guides are so arranged that a boundary therebetween is defined on a side of said hot air outlet rather than a side of said combustion chamber.

12. A hot air space heater (1, 101) as defined in claim 10 or 11, **characterized in that** said boundary between said first guide and said second guide is arranged so as to project from said second rear side wall by a length substantially equal to the shortest distance between said second rear side wall portion (47a, 147a) and said combustion chamber (29, 129).

## Patentansprüche

1. Luftheizer (1, 101), umfassend
einen Rahmen (3, 103), der vordere Platte (5), eine hintere Platte (9), ein Paar von Seitenplatten (13, 15) und eine obere Platte (17) beinhaltet;
wobei die vordere Platte des Rahmens mit einem Heißluftauslaß (7, 107) versehen ist, und die hintere Platte des Rahmens mit einer Innenluftansaugöffnung (11, 111) versehen ist;
einen Brenner (19), der im Rahmen eher in der Nähe einer der Seitenplatten des Rahmens als in einem mittleren Abschnitt des Rahmens angeordnet ist;
eine Verbrennungskammer (29, 129), die im Rahmen in einer solchen Weise definiert ist, daß sie über dem Brenner angeordnet ist und damit in Verbindung steht;
ein Innenluftkonvektionsgebläse (31, 131), das in der Nähe der Innenluftansaugöffnung angeordnet ist, um Innenluft durch die Innenluftansaugöffnung in den Rahmen zuzuführen und die durch in der Verbrennungskammer erzeugte Verbrennungshitze erhitzte Innenluft zum Heißluftauslaß zu führen; und
einen Kanalaufbau (33, 133), der im Rahmen angeordnet ist und die Verbrennungskammer enthält;
wobei der Kanalaufbau so angeordnet ist, daß er einen Luftzufuhrdurchgang (35, 135) zum Führen der erhitzten Innenluft zum Heißluftauslaß definiert;
wobei der Heißluftauslaß so ausgebildet ist, daß er sich über einen der Verbrennungskammer gegenüberliegenden Abschnitt der vorderen Platte des Rahmens gegenüber der Verbrennungskammer hinaus zu einem Abschnitt der vorderen Platte in der Nähe der anderen Seitenplatte des Rahmens erstreckt,
**dadurch gekennzeichnet, daß**
der Kanalaufbau eine erste Seitenwand (47, 147) beinhaltet, die eher in der Nähe eines mittleren Abschnitts des Rahmens angeordnet ist, als die Verbrennungskammer;
die erste Seitenwand einen ersten hinteren Seitenwandabschnitt (47a, 147a) beinhaltet, der ein seitliches proximales Ende aufweist, das mit der hinteren Platte des Rahmens verbunden ist, und so angeordnet ist, daß er sich von der hinteren Platte des Rahmens zu einem mittleren Abschnitt der vorderen Platte des Rahmens erstreckt;
der erste hintere Seitenwandabschnitt eine innere Oberfläche aufweist, die zum Luftzufuhrdurchgang gerichtet ist, der zur Verbrennungskammer führt, und ein seitliches distales Ende aufweist, das an einer vorherbestimmten Stelle kurz vor der vordern Platte des Rahmens endet;
die erste Seitenwand auch einen ersten vorderen Seitenwandabschnitt (47b, 147b) beinhaltet, der zwischen dem seitlichen distalen Ende des ersten hinteren Seitenwandabschnitts und einem an einer Seite der anderen Seitenplatte des Rahmens angeordneten ersten offenen Ende (7a, 107a) des Heißluftauslasses angeordnet ist;
der erste vordere Seitenwandabschnitt so angeordnet ist, daß ein Abstand zwischen einer inneren Oberflächen davon, die zum Luftzufuhrdurchgang gerichtet ist, und dem Heißluftauslaß zum ersten offenen Ende hin nach und nach verkleinert wird;
der Kanalaufbau auch eine zweite Seitenwand (49, 149) beinhaltet, die eher in der Nähe einer Seitenplatte des Rahmens angeordnet ist, als die Verbrennungskammer;
die zweite Seitenwand einen zweiten hinteren Seitenwandabschnitt (49a, 149a) und einen zweiten vorderen Seitenwandabschnitt (49b, 149b) beinhaltet;
der zweite hintere Seitenwandabschnitt ein seitliches proximales Ende aufweist, das mit der hinteren Platte des Rahmens verbunden ist, damit es sich davon zur vorderen Platte des Rahmens erstreckt, und ein seitliches distales Ende aufweist, das an einer vorherbestimmten Stelle kurz vor der vorderen Platte des Rahmens endet, während eine innere Oberfläche davon, die zum Luftzufuhrdurchgang gerichtet ist, der zur Verbrennungskammer führt, bewahrt wird;
der zweite vordere Seitenwandabschnitt so angeordnet ist, daß er zwischen dem seitlichen distalen Ende des zweiten hinteren Seitenwandabschnitts und einem an einer Seite der einen Seitenplatte des Rahmens angeordneten zweiten offenen Ende (7b, 107b) des Heißluftauslasses angeordnet ist;
der zweite vordere Seitenwandabschnitt eine erste Führung (50a, 150a) und eine zweite Führung (50b, 150b) beinhaltet;
die erste Führung an einem seitlichen proximalen Ende davon mit dem seitlichen distalen Ende des zweiten hinteren Seitenwandabschnitts verbunden ist und so angeordnet ist, daß sie sich schräg zur vorderen Platte des Rahmens erstreckt, während eine innere Oberfläche davon, die zum Luftzufuhrdurchgang gerichtet ist, unter Annäherung an die innere Oberfläche des ersten vorderen Seitenwandabschnitts gehalten wird; und
die zweite Führung so angeordnet ist, daß sie sich von einem seitlichen distalen Ende der ersten Führung zum zweiten offenen Ende des Heißluftauslasses erstreckt, während eine innere Oberfläche davon, die zum Luftzufuhrdurchgang gerichtet ist, nach und nach von der inneren Oberfläche des vorderen Seitenwandabschnitts fern gehalten wird.

2. Luftheizer (1, 101) nach Anspruch 1, **dadurch gekennzeichnet, daß** der Brenner Brennstoff in Form einer Flüssigkeit verwendet; und
der Rahmen im Inneren in einer solchen Weise mit einem Brennstofftank versehen ist, daß dieser in einem Raum zwischen dem Kanalaufbau und der anderen Seitenplatte angeordnet ist.

3. Luftheizer (1, 101) nach Anspruch 2, **dadurch gekennzeichnet, daß** der Heißluftauslaß so angeordnet ist, daß er sich zu einem Bereich der vorderen Platte des Rahmens erstreckt, der dem Brennstofftank gegenüberliegt.

4. Luftheizer (1, 101) nach Anspruch 1, **dadurch gekennzeichnet, daß** der Heißluftauslaß eine Öffnung aufweist, die zu einer Höhe ausgebildet ist, die geringer als jene der Innenluftansaugöffnung ist;
der Kanalaufbau eine obere Wand (51) beinhaltet, die so angeordnet ist, daß sie zur oberen Platte des Rahmens gerichtet ist;
die obere Wand des Kanalsystems einen geneigten Abschnitt (51a) beinhaltet, der so angeordnet ist, daß er die Innenluft, die durch das Konvektionsgebläse zugeführt wird, zum Heißluftauslaß richtet, und einen waagerechten Abschnitt (51b) beinhaltet, der mit dem geneigten Abschnitt verbunden ist, so daß er sich davon im Wesentlichen waagerecht zum Heißluftauslaß erstreckt; und
der geneigte Abschnitt entsprechend der ersten Führung des zweiten vorderen Seitenwandabschnitts angeordnet ist, und der waagerechte Abschnitt entsprechend der zweiten Führung des zweiten vorderen Seitenwandabschnitts angeordnet ist.

5. Luftheizer (1, 101) nach Anspruch 4, **dadurch gekennzeichnet, daß** die erste Seitenwand entsprechend dem geneigten Abschnitt und dem waagerechten Abschnitt angeordnet ist.

6. Luftheizer (1, 101) nach Anspruch 1, **dadurch gekennzeichnet, daß** die erste und die zweite Führung des zweiten vorderen Seitenwandabschnitts so ausgebildet werden, daß eine einzelne Metallplatte einem Biegen ausgesetzt wird, so daß sie zusammenwirken, um einen im Querschnitt winkelförmigen Aufbau zu definieren, von dem eine Oberseite zum Inneren des Rahmens gerichtet ist.

7. Luftheizer (1, 101) nach Anspruch 1, **dadurch gekennzeichnet, daß** die innere Oberfläche des ersten hinteren Seitenwandabschnitts und die innere Oberfläche des zweiten hinteren Seitenwandabschnitts so ausgebildet sind, daß sie zueinander parallel sind; und
die erste Führung eine innere Oberfläche aufweist, die parallel zur inneren Oberfläche des ersten vorderen Seitenwandabschnitts definiert ist.

8. Luftheizer (101) nach Anspruch 1, **dadurch gekennzeichnet, daß** die innere Oberfläche des ersten hinteren Seitenwandabschnitts und die innere Oberfläche des zweiten hinteren Seitenwand so ausgebildet sind, daß sie zueinander parallel sind; und
die erste und die zweite Führung (150a, 150b) des zweiten vorderen Seitenwandabschnitts (149) so ausgebildet werden, daß eine einzelne Metallplatte einem Biegen ausgesetzt wird, so daß sie zusammenwirken, um einen im Querschnitt gebogenen Aufbau zu definieren, von dem eine Oberseite zum Inneren des Rahmens gerichtet ist.

9. Luftheizer (101) nach Anspruch 8, **dadurch gekennzeichnet, daß** die innere Oberfläche der ersten Führung zu einem größeren Krümmungsradius als jenem der zweiten Führung ausgebildet ist.

10. Luftheizer (1, 101) nach Anspruch 6, **dadurch gekennzeichnet, daß** die erste und die zweite Führung so angeordnet sind, daß eine Grenze (50c, 150c) zwischen ihnen eher an einer Seite des Heißluftauslasses als an einer Seite der Verbrennungskammer definiert ist.

11. Luftheizer (1, 101) nach Anspruch 8, **dadurch gekennzeichnet, daß** die erste und die zweite Führung so angeordnet sind, daß eine Grenze zwischen ihnen eher an einer Seite des Heißluftauslasses als an einer Seite der Verbrennungskammer definiert ist.

12. Luftheizer (1, 101) nach Anspruch 10 oder 11, **dadurch gekennzeichnet, daß** die Grenze zwischen der ersten Führung und der zweiten Führung so angeordnet ist, daß sie von der zweiten hinteren Seitenwand um eine Länge vorspringt, die im Wesentlichen dem kürzesten Abstand zwischen dem zweiten hinteren Seitenwandabschnitt (47a, 147a) und der Verbrennungskammer (29, 129) gleich ist.

## Revendications

1. Poele à air chaud (1, 101) constitue ;
d'un bâti comprenant une plaque avant (5), une plaque arrière (3, 103) (9), une paire de plaques latérales (13, 15) et d'une plaque de dessus (17) ;
ladite plaque avant dudit bâti étant pourvue d'une sortie d'air chaud et ladite plaque arrière dudit bâti étant pourvue (7, 107) d'un port de prise d'air intérieur (11, 111) ;
d'un brûleur (19) dispose dans ledit bâti a proximité de l'une desdites plaques latérales plutôt que dans une partie centrale dudit bâti ;
d'une chambre de combustion définie dans ledit bâti (29, 129) d'une façon telle qu'elle est placée au-dessus dudit brûleur et communique avec celui-ci ;
d'un ventilateur de convection d'air intérieur disposé dans le voisinage (31, 131) dudit port d'entrée d'air intérieur pour alimenter en air intérieur à travers ledit port d'entrée d'air intérieur dans ledit bâti et guider l'air intérieur chauffe par la chaleur de combustion générée dans ladite chambre de combustion vers ladite sortie d'air chaud ; et
une structure de conduit disposée dans ledit bâti et ayant (33, 133) ladite chambre de combustion qui est incorporée à l'intérieur ;
ladite structure de conduit étant disposée de telle façon à définir un passage d'alimentation d'air pour guider l'air intérieur chauffe (35, 135) vers ladite sortie d'air chaud ;
ladite sortie d'air chaud étant formée de telle façon à s'étendre au-delà de la zone opposée à la chambre de combustion de ladite plaque avant dudit bâti à l'oppose de ladite chambre de combustion vers une zone de ladite plaque avant dans la proximité de l'autre plaque latérale dudit bâti,
**caractérisé en ce que** :
ladite structure de conduit comprend une première paroi latérale (47, 147) disposée dans la proximité d'une partie centrale dudit bâti plutôt que ladite chambre de combustion ;
ladite première paroi latérale comprend une première partie de paroi arrière ayant une extrémité proximale latérale reliée a ladite (47a, 147a) plaque arrière dudit bâti vers une partie centrale de ladite plaque avant dudit bâti ;
ladite première paroi latérale a une surface intérieure qui fait face audit passage d'alimentation en air dirige vers ladite chambre de combustion et à une extrémité distale latérale terminée à une position prédéterminée courte de ladite plaque avant dudit bâti ;
ladite première paroi latérale comprend une première partie de paroi latérale avant disposée entre ladite extrémité distale latérale (47b, 147b) de ladite première partie de paroi latérale arrière et une première extrémité ouverte (7a, 107a) de ladite sortie d'air chaud placée sur un coté de l'autre plaque latérale de ladite structure ;
ladite première partie de paroi latérale frontale est disposée de telle façon qu'une distance entre sa surface faisant face audit passage d'alimentation d'air et à ladite sortie d'air chaud est graduellement réduit vers ladite première extrémité ouverte ;
ladite structure de conduit comprend aussi une deuxième paroi latérale (49, 149) placée dans la proximité de ladite une plaque latérale dudit bâti plutôt que ladite chambre de combustion ;
ladite deuxième paroi latérale comprend une partie de deuxième paroi latérale arrière et une deuxième partie de paroi latérale avant (49a, 149a) (49b, 149b)
ladite deuxième partie de paroi latérale arrière à une extrémité proximale latérale reliée à ladite plaque arrière dudit bâti et une extrémité distale latérale terminée à une position prédéterminée courte de ladite plaque avant dudit bâti tout en prenant une surface intérieure qui fait face audit passage d'alimentation en air orienté vers ladite chambre de combustion ;
ladite deuxième partie de paroi de cote avant est disposée de telle façon a être placée entre ladite extrémité distale latérale de ladite deuxième partie de paroi de cote arrière et une deuxième extrémité ouverte de ladite sortie d'air chaud (7b, 107b) placée sur un coté de ladite une plaque de coté dudit bâti ;
ladite deuxième partie de paroi latérale avant comprend un premier guide et un deuxième guide (50a, 150a), (50b, 150b)
ledit premier guide est relie à son extrémité proximale latérale vers ladite extrémité latérale proximale de ladite deuxième partie de paroi latérale arrière et disposée de telle façon à s'étendre obliquement vers ladite plaque avant dudit bâti tout en prenant sa surface intérieure qui fait face audit passage d'alimentation d'air approchant ladite surface intérieure de ladite première partie de paroi latérale avant ; et
ledit deuxième guide est dispose de façon à s'étendre depuis une extrémité distale latérale dudit premier guide vers ladite deuxième extrémité ouverte de ladite sortie d'air chaud tout en prenant sa surface intérieure qui fait face audit passage d'alimentation d'air graduellement éloigné de ladite surface intérieure de ladite partie de paroi latérale avant.

2. Poele à air chaud (1, 101) comme défini dans la revendication 1 **caractérisé en ce que** ledit brûleur utilise un carburant sous forme d'un liquide ; et
ledit bâti est pourvu a l'intérieur d'un réservoir de carburant de façon a être place dans un espace entre ladite structure de conduite et ladite plaque de l'autre cote.

3. Poele à air chaud (1, 101) selon la revendication 2, **caractérisé en ce que** ladite sortie d'air chaud est disposée de telle façon à s'étendre vers une zone de ladite plaque avant dudit bâti vers ledit réservoir de carburant.

4. Poele à air chaud (1, 101), selon la revendication 1, **caractérisé en ce que** ladite sortie d'air chaud à une ouverture formée dans une hauteur plus petite que celle dudit port d'entrée d'air intérieur ;
ladite structure de conduite comprend une paroi de dessus (51) disposée de telle façon à faire face à ladite plaque de dessus dudit bâti ;
ladite paroi de dessus de ladite structure de conduit comprend une partie inclinée (51a) disposée de façon à diriger vers le bas ledit air d'alimentation intérieur par ledit ventilateur de convection vers ladite sortie d'air chaud et une partie horizontale (51b) reliée à ladite partie inclinée de façon à l'étendre sensiblement horizontalement vers ladite sortie d'air chaud ; et
ladite partie inclinée est disposée en accord avec ledit premier guide de ladite deuxième partie de paroi latérale avant et ladite partie horizontale est disposée en accord avec le deuxième guide de ladite deuxième partie de paroi latérale avant.

5. Poele à air chaud (1, 101) comme défini dans la revendication 4, **caractérisé en ce que** ladite première partie de paroi latérale est disposée en accord avec ladite partie inclinée et ladite partie horizontale.

6. Poele à air chaud (1, 101) selon la revendication 1, **caractérisé en ce que** lesdits premier et deuxième guides de ladite deuxième partie de paroi latérale avant sont formés en soumettant une plaque de métal seule à un pliage de façon a ce qu'ils coopèrent l'un avec l'autre pour définir une configuration en chevron dans la section duquel un dessus est dirige vers l'intérieur dudit bâti.

7. Poele à air chaud (1, 101) selon la revendication 1, **caractérisé en ce que** ladite surface intérieure de ladite première partie de paroi arrière et de ladite surface intérieure de ladite deuxième partie de paroi latérale arrière sont formées de telle façon qu'elle soient parallèles l'une à l'autre ; et
ledit premier guide a une surface intérieure définie en parallèle à ladite surface intérieure de ladite première partie de paroi latérale avant.

8. Poele à air chaud (101) selon la revendication 1, **caractérisé en ce que** ladite surface intérieure de ladite première partie de paroi arrière et ladite surface intérieure de ladite deuxième partie de paroi latérale arrière sont formées de telle façon qu'elles soient parallèles l'une par rapport à l'autre ; et
lesdits premier et deuxième guides (150a, 150b) de ladite deuxième partie de paroi latérale avant (149) sont formes en soumettant une seule plaque de métal a un pliage de telle façon qu'ils coopèrent l'un avec l'autre pour définir une configuration courbée dans la section de laquelle un dessus est dirigé vers l'intérieur dudit bâti.

9. Poele à air chaud (101) selon la revendication 8, **caractérisé en ce que** ladite surface intérieure dudit premier guide est formée dans un rayon de courbure plus large que celui dudit deuxième guide.

10. Poele à air chaud (1, 101) selon la revendication 6, **caractérisé en ce que** lesdits premier et deuxième guides sont disposés de telle façon qu'une limite (50c, 150c) entre eux est définie sur un cote de ladite sortie d'air chaud plutôt que sur un coté de ladite chambre de combustion.

11. Poele à air chaud (1, 101) selon la revendication 8, **caractérisé en ce que** lesdits premier et deuxième guides sont disposés de telle façon qu'une limite entre eux est définie sur un coté de ladite sortie d'air chaud plutôt que sur un coté de ladite chambre de combustion.

12. Poele à air chaud (1, 101) selon la revendication 10 ou la revendication 11, **caractérisé en ce que** ladite limite entre ledit premier guide et ledit deuxième guide est disposée de telle façon a se projeter depuis ladite paroi latérale arrière par une longueur sensiblement égale a la distance la plus courte entre ladite deuxième partie de paroi latérale arrière (47a, 147a) et ladite chambre de combustion (29, 129).
